Europäisches Patentamt

European Patent Office

Office européen des brevets

(11) Veröffentlichungsnummer: **0 507 120 A2**

## EUROPÄISCHE PATENTANMELDUNG

(21) Anmeldenummer: **92104156.2**

(22) Anmeldetag: **11.03.92**

(51) Int. Cl.5: **B60H 1/00**

(30) Priorität: **30.03.91 DE 4110512**

(43) Veröffentlichungstag der Anmeldung:
**07.10.92 Patentblatt 92/41**

(84) Benannte Vertragsstaaten:
**BE DE ES FR GB IT**

(71) Anmelder: **Adam Opel Aktiengesellschaft
Bahnhofsplatz 1 Postfach 17 10
W-6090 Rüsselsheim(DE)**

(72) Erfinder: **Springer, Peter, Dipl.-Ing. (FH)
Auf dem Maindamm 12
W-6095 Gustavsburg(DE)**
Erfinder: **Erdmann, Gunther
Amorbacher Strasse 54
W-6090 Rüsselsheim(DE)**
Erfinder: **Detampel, Heinz
Moritz-von-Schwind-Strasse 22
W-6090 Rüsselsheim(DE)**

(74) Vertreter: **Bergerin, Ralf, Dipl.-Ing. et al
Adam Opel AG, Bahnhofsplatz 1 Postfach 17
10
W-6090 Rüsselsheim(DE)**

(54) **Klimaanlage für ein Kraftfahrzeug.**

(57) Eine Klimaanlage hat hinter einem Verdampfer (3) einen Heizkanal (7) mit einem wasserbetriebenen Wärmetauscher (8). Mittels einer Mischluftklappe (9) und einer Luftleitklappe (11) kann die vom Verdampfer (3) kommende Luft zu einem beliebigen Anteil über den Wärmetauscher (8) oder an ihm vorbei zu einem Luftauslaß (5, 6) geleitet werden. Erfindungsgemäß ist die Mischluftklappe (9) mit einem Wasserabsperrventil (13) im Wasseranschluß (12) des Wärmetauschers (8) gekoppelt, so daß bei nicht luftdurchströmtem Heizkanal (7) der Wärmetauscher (8) kalt bleibt.

Fig.1

Die Erfindung betrifft eine Klimaanlage für ein Kraftfahrzeug, welche einen Verdampfer und in einem Heizkanal einen Wärmetauscher mit einem Wasseranschluß aufweist und bei der eine Mischluftklappe zum Aufteilen des vom Verdampfer kommenden Luftstromes über den Heizkanal zu einem Luftauslaß oder unmittelbar über einen Luftkanal zu dem Luftauslaß vorgesehen ist. Eine solche Klimaanlage ist beispielsweise in der US-A-4,852,638 beschrieben.

Zur Regelung der Luftaustrittstemperatur solcher Klimaanlagen kann man entweder die durch den Wärmetauscher strömende Wassermenge verstellen oder aber sich des Mischluftprinzips bedienen, bei dem mittels einer Mischluftklappe der Anteil des durch den Heizkanal geführten Luftstromes in Relation zum unmittelbar über einen Luftkanal zum Luftauslaß führenden Luftstromes verändert wird. Dieses Mischluftprinzip ist mit geringerem Aufwand zu verwirklichen. Es hat jedoch den wasserseitig geregelten Klimaanlagen gegenüber den Nachteil, daß sich der Heizkanal durch den permanent vom Wasser durchströmten Wärmetauscher aufheizt, wenn keine oder nur wenig Luft durch ihn geführt wird. Diese Wärme gelangt teilweise in den den Heizkanal umgehenden Luftstrom und führt zu einer unerwünschten Erhöhung der Luftaustrittstemperatur. Speziell bei Klimaanlagen wirkt sich in der Klappenstellung "kalt" die Aufheizung des gesamten Klimagehäuses, speziell im Bereich des Heizkernes und dessen äußeres Umfeld (Ansaugbereich in Umluftstellung) nachteilig aus. Die Austrittstemperatur der Klimaanlage verschlechtert sich dann um einige Grad Kelvin.

Diesen Nachteil hat man bislang in Kauf genommen, weil die Anordnung eines Wasserabsperrventils und die hierzu erforderliche, motorische Betätigung einen beträchtlichen Aufwand bedingen würde.

Der Erfindung liegt das Problem zugrunde, eine Klimaanlage der eingangs genannten Art so auszubilden, daß ein Aufheizen des Heizkanals durch das Wasser seines Wärmetauschers bei nicht oder nur geringfügig von Luft durchströmtem Heizkanal auf möglichst einfache Weise vermieden wird.

Dieses Problem wird erfindungsgemäß dadurch gelöst, daß im Wasseranschluß ein mit der Mischluftklappe mechanisch gekoppeltes und bei Absperren des Heizkanals mittels der Mischluftklappe schließendes Wasserabsperrventil vorgesehen ist.

Durch diese erfindungsgemäße Anordnung eines Wasserabsperrventils im Wasseranschluß und durch seine mechanische Kopplung mit der Mischluftklappe kommt es zwangsläufig und auf sehr einfache Weise zu einem Schließen des Wasserabsperrventils beim Schließen der Mischluftklappe. Der bisher erforderliche Aufwand für die separate Ansteuerung eines Wasserabsperrventils, die für ein solches Ventil bestehenden Platzprobleme und der relativ hohe Montageaufwand entfallen dank der Erfindung.

Nach dem Mischluftprinzip arbeitende Klimaanlagen können ohne Veränderung ihrer die Mischluftklappe steuernden Regelung in die erfindungsgemäßen Klimaanlagen umgewandelt werden, wenn die Kopplung zum Schließen des Wasserabsperrventils unmittelbar vor dem Schließen der Mischluftklappe ausgebildet ist.

Konstruktiv besonders einfach ist das Wasserabsperrventil gestaltet, wenn es ein Schieberventil ist, dessen Schiebergehäuse an einer Seite einen Wasserzulaufanschluß und einen Wasserablaufanschluß und auf der gegenüberliegenden Seite zwei Wärmetauscheranschlüsse aufweist.

Als Wasserabsperrventil eignen sich natürlich nicht nur Schieberventile. Der nachfolgend verwendete Begriff "Schieberventile" soll nur beispielshaft sein und anders gestaltete Ventile nicht ausschließen.

Der Schieber kann auf einfache Weise in Schließrichtung und Öffnungsrichtung mittels der Mischluftklappe bewegt werden, wenn zur Betätigung des Wasserabsperrventils am Schieber ein Schiebergestänge angeordnet ist, welches in eine Kulisse eines mit der Mischluftklappe verschwenkbaren Betätigungsteils eingreift.

Eine alternative Ausführungsform der Schieberbetätigung besteht darin, daß der Schieber durch eine Feder in Of-fenstellung vorgespannt ist und zur Betätigung des Wasserabsperrventils ein mit der Mischluftklappe verschwenkbarer Steuernocken dient, welcher gegen einen aus dem Wasserabsperrventil herausgeführten und mit dem Schieber verbundenen Stößel anliegt.

Bei manchen Motorkühlkreisläufen ist es erforderlich, daß der zum Wärmetauscher führende Wasserkreislauf nicht unterbrochen wird. Auch in solchen Fällen kann man den Wasserfluß durch den Wärmetauscher auf die erfindungsgemäße Weise mittels der Mischluftklappe unterbrechen, wenn gemäß einer vorteilhaften Ausgestaltung der Erfindung im Wasserabsperrventil zwischen seinem Wasserzulaufanschluß und Wasserablaufanschluß eine Bypassverbindung vorgesehen ist und wenn der Schieber mit einem bei geöffnetem Schieber die Bypassverbindung sperrenden Bypass-Sperrschieber mechanisch gekoppelt ist.

Besonders einfach ist eine solche einen Wasserbypass aufweisende Ausführungsform gestaltet, wenn der Bypass-Sperrschieber am gleichen Schiebergestänge befestigt ist wie der Schieber.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. In ihr zeigen die

Fig. 1 eine schematische Seitenansicht einer erfindungsgemäßen Klimaanlage,

Fig. 2 einen senkrechten Schnitt durch ein Wasserabsperrventil nach der Erfindung mit angrenzenden Bauteilen,

Fig. 3 einen senkrechten, gegenüber Figur 2 um 90 Grad gedrehten Schnitt durch das Wasserabsperrventil mit angrenzenden Bauteilen,

Fig. 4 einen senkrechten Schnitt durch eine zweite Ausführungsform eines Wasserabsperrventils mit angrenzenden Bauteilen,

Fig. 5 einen senkrechten Schnitt durch eine dritte Ausführungsform eines Wasserabsperrventils mit angrenzenden Bauteilen.

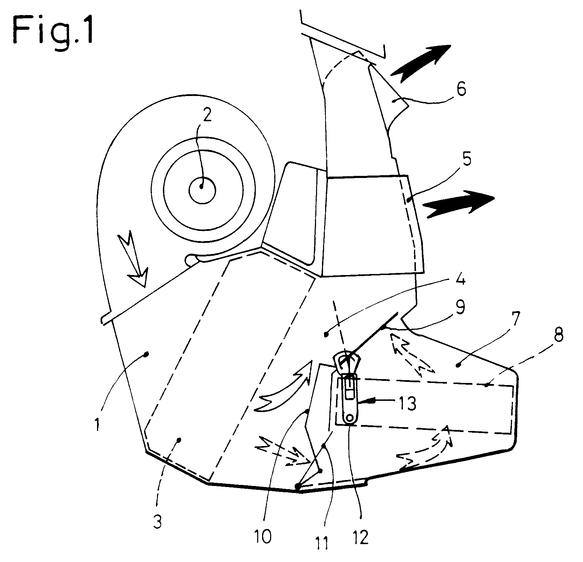

Die in Figur 1 gezeigte Klimaanlage hat in einem Gehäuse 1 ein Gebläse 2, welches die angesaugte Luft durch einen Verdampfer 3 über einen Luftkanal 4 zu Luftauslässen 5, 6 zu fördern vermag. Am Luftkanal 4 ist ein Heizkanal 7 mit einem wasserbetriebenen Wärmetauscher 8 angebracht, der einen Wasseranschluß 12 hat. Mittels einer Mischluftklappe 9 und einer mit ihr über ein Koppelgestänge 10 verbundenen Luftleitklappe 11 kann man den Anteil der durch den Heizkanal 7 strömenden Luft im Verhältnis zur unmittelbar über den Luftkanal 4 zu den Luftauslässen 5, 6 strömenden Luft verändern, um die Luftaustrittstemperatur zu regeln oder zu steuern. Für die Erfindung wesentlich ist ein Wasserabsperrventil 13 im Wasseranschluß 12, welches mechanisch mit der Mischluftklappe 9 gekoppelt ist und den Wasserdurchfluß im Wärmetauscher 8 unterbricht, wenn sich die Mischluftklappe 9 in der dargestellten, nahezu geschlossenen oder in einer vollständig geschlossenen Stellung befindet. Die Gestaltung des Wasserabsperrventils 13 ergibt sich aus den folgenden Figuren.

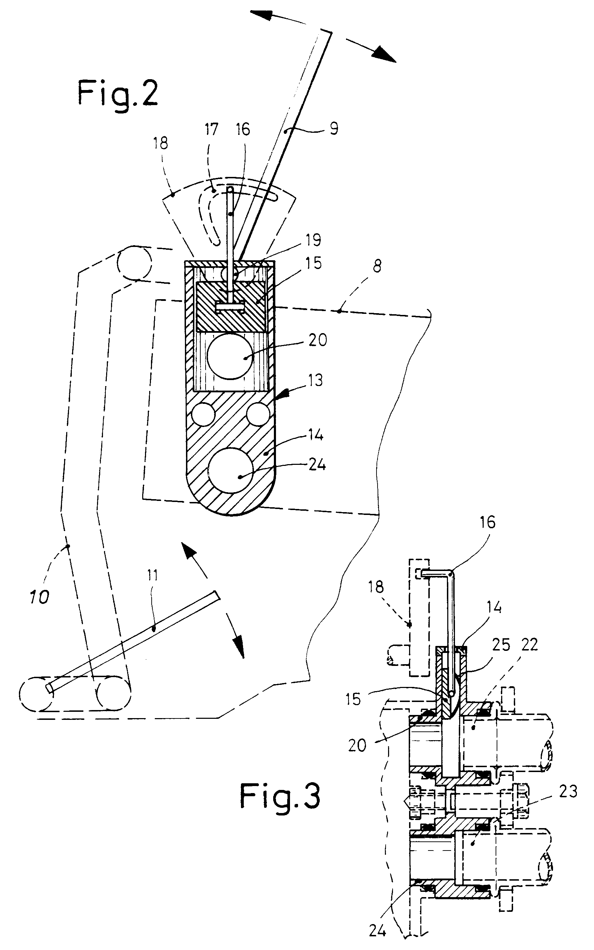

Die Figur 2 zeigt, daß das Wasserabsperrventil 13 als Schieberventil ausgebildet ist, welches in einem Schiebergehäuse 14 einen Schieber 15 hat. An ihm ist ein Schiebergestänge 16 befestigt, welches mit seinem freien, in der Figur 2 gesehen oberen Ende in eine Kulisse 17 eines Betätigungsteils 18 greift. Dieses Betätigungsteil 18 ist fest mit der Mischluftklappe 9 verbunden oder einstückig mit ihr ausgebildet und vermag um eine Achse 19 zu schwenken. Kippt man in Figur 2 gesehen das Betätigungsteil 18 im Uhrzeigersinn, so wird durch den Verlauf der Kulisse 17 der Schieber 15 nach unten bewegt, so daß er in seiner unteren Endstellung einen in den Wärmetauscher 8 führenden Wärmetauscheranschluß 20 versperrt. Ein darunter befindlicher, dem Wasserabfluß dienender Wärmetauscheranschluß 24 bleibt stets offen.

Die Figur 2 läßt weiterhin schematisch das Koppelgestänge 10 erkennen, mit dem die Mischluftklappe 9 mit der Luftleitklappe 11 gekoppelt ist.

Die Figur 3 zeigt, daß das Schiebergehäuse 14 auf einer Seite übereinander einen Wasserzulaufanschluß 22 und darunter einen Wasserablaufanschluß 23 aufweist. Hierzu fluchtend auf der gegenüberliegenden Seite sind die Wärmetauscheranschlüsse 20 und 24 vorgesehen. Ebenfalls dargestellt in Figur 3 ist der Schieber 15 mit seinem Schiebergestänge 16. Ein im Schiebergehäuse 14 angeordnetes Federelement 25 preßt den Schieber 15 dichtend gegen eine Seite des Schiebergehäuses 14.

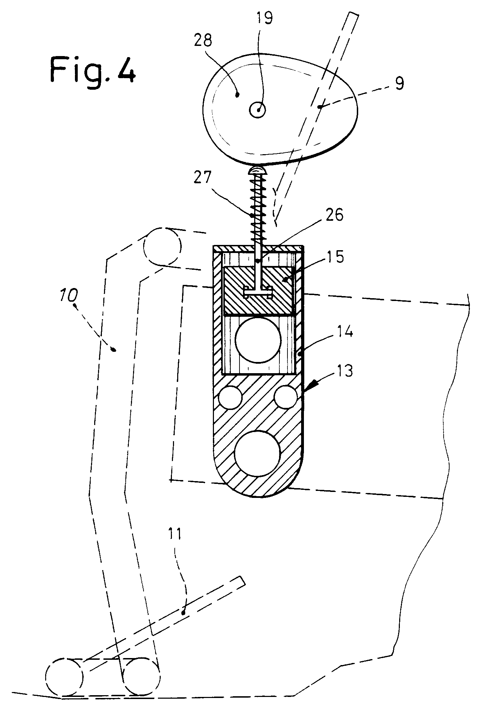

Die Ausführungsform gemäß Figur 4 unterscheidet sich von der zuvor beschriebenen durch eine andere Art der Betätigung des Schiebers 15. An ihm ist ein aus dem Schiebergehäuse 14 nach oben hin herausführender Stößel 26 angebracht, der von einer den Schieber 15 in seine Offenstellung vorspannenden Feder 27 umgeben ist. Dieser Stößel 26 kann durch Verdrehen eines Steuernokkens 28 um die Achse 19 in das Schiebergehäuse 14 hinein bewegt werden. Der Steuernocken 28 ist fest mit der Mischluftklappe 9 verbunden, so daß es bei einem Verschwenken der Mischluftklappe 9 zwangsläufig zu einer Betätigung des Wasserabsperrventils 13 kommt.

Genau wie bei der zuvor beschriebenen Ausführungsform ist die Mischluftklappe 9 über das Koppelgestänge 10 mit der Luftleitklappe 11 gekoppelt.

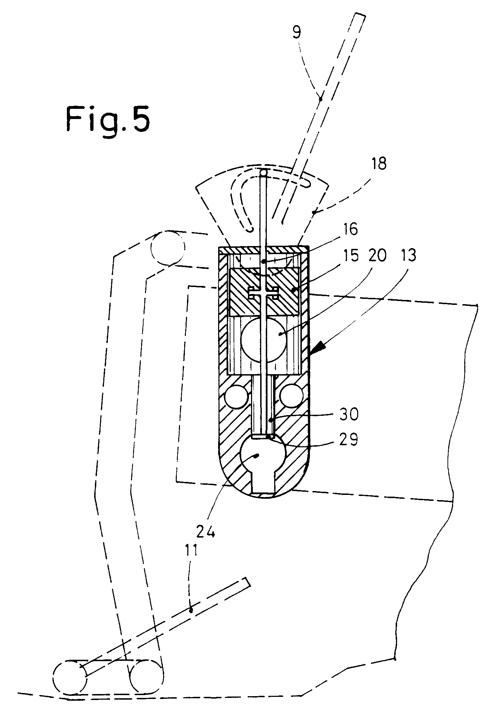

Gemäß Figur 5 ist am Schiebergestänge 16 unterhalb des Schiebers 15 ein Bypass-Sperrschieber 29 befestigt, der in der dargestellten Offenstellung des Schiebers 15 eine BypassVerbindung 30 sperrt. Wird der Schieber 15 durch Verschwenken der Mischluftklappe 9 nach unten in Schließstellung bewegt, so entsteht eine unmittelbare Verbindung zwischen dem in Figur 3 gezeigten Wasserzulaufanschluß 22 und dem dort ebenfalls dargestellten Wasserablaufanschluß 23. Zu sehen sind in Figur 5 weiterhin die Wärmetauscheranschlüsse 20 und 24.

## Patentansprüche

1. Klimaanlage für ein Kraftfahrzeug, welche einen Verdampfer und in einem Heizkanal einen Wärmetauscher mit einem Wasseranschluß aufweist und bei der eine Mischluftklappe zum Aufteilen des vom Verdampfer kommenden Luftstromes über den Heizkanal zu einem Luftauslaß oder unmittelbar über einen Luftkanal zu dem Luftauslaß vorgesehen ist, dadurch gekennzeichnet, daß im Wasseranschluß (12) ein mit der Mischluftklappe (9) mechanisch gekoppeltes und bei Absperren des Heizkanals (7) mittels der Mischluftklappe (9) schließendes Wasserabsperrventil (13) vorgesehen ist.

2. Klimaanlage nach Anspruch 1, dadurch gekennzeichnet, daß die Kopplung zum Schließen des Wasserabsperrventils (13) unmittelbar vor dem Schließen der Mischluftklappe (9) ausgebildet ist.

3. Klimaanlage nach den Ansprüchen 1 oder 2, dadurch gekennzeichnet, daß das Wasserabsperrventil (13) ein Schieberventil ist, dessen Schiebergehäuse (14) an einer Seite einen Wasserzulaufanschluß (22) und einen Wasserablaufanschluß (23) und auf der gegenüberliegenden Seite zwei Wärmetauscheranschlüsse (20, 24) aufweist.

4. Klimaanlage nach zumindest einem der vorangehenden Ansprüche, dadurch gekennzeichnet, daß zur Betätigung des Wasserabsperrventils (13) am Schieber (15) ein Schiebergestänge (16) angeordnet ist, welches in eine Kulisse (17) eines mit der Mischluftklappe (9) verschwenkbaren Betätigungsteils (18) eingreift.

5. Klimaanlage nach zumindest einem der vorangehenden Ansprüche, dadurch gekennzeichnet, daß der Schieber (15) durch eine Feder (27) in Offenstellung vorgespannt ist und zur Betätigung des Wasserabsperrventils (13) ein mit der Mischluftklappe (9) verschwenkbarer Steuernocken (28) dient, welcher gegen einen aus dem Schiebergehäuse (14) herausgeführten und mit dem Schieber (15) verbundenen Stößel (26) anliegt.

6. Klimaanlage nach zumindest einem der vorangehenden Ansprüche, dadurch gekennzeichnet, daß im Wasserabsperrventil (13) zwischen seinem Wasserzulaufanschluß (22) und Wasserablaufanschluß (23) eine Bypassverbindung (30) vorgesehen ist und daß der Schieber (15) mit einem bei geöffnetem Schieber (15) die Bypassverbindung (30) sperrenden Bypass-Sperrschieber (29) mechanisch gekoppelt ist.

7. Klimaanlage nach zumindest einem der vorangehenden Ansprüche, dadurch gekennzeichnet, daß der Bypass-Sperrschieber (29) am gleichen Schiebergestänge (16) befestigt ist wie der Schieber (15).

# Fig.1

Fig.2

Fig.3

# Fig. 4

# Fig.5

9

18

16

15  20  13

30

29

24

11